# EUROPEAN PATENT APPLICATION

(11) **EP 4 421 942 A2**
(43) Date of publication of application: **28.08.2024**
(21) Application number: 23212421.4
(22) Date of filing: 27.11.2023
(51) Int. Cl.: H01M 10/42, H01M 50/105, H01M 50/211

(54) **BATTERY PACK**

(30) Priority: 24.02.2023 KR 20230025289
(71) Applicant: Samsung SDI Co., Ltd., Yongin-si, Gyeonggi-do 17084 (KR)
(72) Inventor: LEE, Seokbong, 17084 Yongin-si (KR)
(74) Representative: Marks & Clerk LLP

(57) **Abstract**

A battery pack includes a case, an electrode assembly accommodated in the case, and a protection circuit module connected to the electrode assembly, wherein the protection circuit module includes, a substrate, one or more component mounting areas with a plurality of components, and one or more coating areas, at least some of which have different heights from a top surface of the substrate.

## Description

### BACKGROUND

### 1. Field

One or more embodiments relate to a battery pack.

### 2. Description of the Related Art

A secondary battery is a battery that may be charged and discharged, unlike a primary battery that cannot be charged. Secondary batteries are used as an energy source for mobile devices, electric vehicles, hybrid vehicles, electric bicycles, and uninterruptible power supplies, etc., and depending on the type of an external device, they may be used in the form of a single battery or a pack of multiple batteries connected into a single unit.

### SUMMARY

Embodiments are directed to a battery pack including a case, an electrode assembly accommodated in the case, and a protection circuit module connected to the electrode assembly, wherein the protection circuit module includes a substrate, one or more component mounting areas with a plurality of components, and one or more coating areas, at least some of which have different heights from a top surface of the substrate.

In embodiments, the one or more component mounting areas may be on an inner side of the one or more coating areas.

In embodiments, a coating solution may be applied to an inner side of the one or more coating areas.

In embodiments, the one or more coating areas may form a gap with the one or more component mounting areas.

In embodiments, the one or more coating areas may include protruding structures on the substrate enclosing the one or more component mounting areas.

In embodiments, a contour of the one or more coating areas may extend continuously without breaks.

In embodiments, the one or more coating areas may be compartmentalized by one or more step portions stacked on the substrate and enclosing the one or more component mounting areas, and the one or more component mounting areas may be inside the one or more coating areas.

In embodiments, the one or more step portions may include an area inclined downward toward the component mounting area.

In embodiments, the protection circuit module may include one or more substrate tabs arranged on the substrate and having one or more extensions bent upwards, and the one or more coating areas may abut the one or more extensions of the one or more substrate tabs.

In embodiments, the one or more extensions may extend across a widthwise direction of the substrate.

In embodiments, the one or more extensions may be inclined toward the one or more coating areas such that the one or more coating areas may have a tapered shape that narrows upwards if viewed from the side.

In embodiments, a pair of substrate tabs may be spaced apart along a lengthwise direction of the substrate such that a component mounting area may be therebetween, the pair of substrate tabs may compartmentalize a coating area including the component mounting area, and the pair of substrate tabs may include extensions.

In embodiments, the coating area may include a pair of protruding structures between the pair of substrate tabs and on a top surface of the substrate.

In embodiments, the pair of protruding structures may abut extensions on the pair of substrate tabs, forming an overall closed contour with the extensions.

In embodiments, the pair of protruding structures may include one or more bent portions extending toward the pair of substrate tabs.

In embodiments, the one or more bent portions may be each at a lengthwise end of a protruding structure and may be paired such that the extensions are arranged therebetween.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1 shows an exploded view of a battery cell according to an embodiment;
FIG. 2 shows an assembled view of the battery cell according to an embodiment;
FIG. 3 shows a schematic view of a battery pack according to an embodiment;
FIG. 4 shows an enlarged view of a portion of the protection circuit module according to an embodiment;
FIG. 5 shows a cross-sectional view of the protection circuit module of FIG. 4 with a coating solution applied thereto;
FIG. 6 shows an enlarged view of a portion of a protection circuit module according to another embodiment;
FIG. 7 shows a cross-sectional view of the protection circuit module of FIG. 6 with the coating solution applied thereto;
FIG. 8 shows an enlarged view of a portion of a protection circuit module according to another embodiment;
FIG. 9 shows a cross-sectional view of the protection circuit module of FIG. 8 with the coating solution applied thereto;
FIG. 10 shows an enlarged view of a portion of a protection circuit module according to another embodiment; and
FIG. 11 shows an enlarged view of a portion of a protection circuit module according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

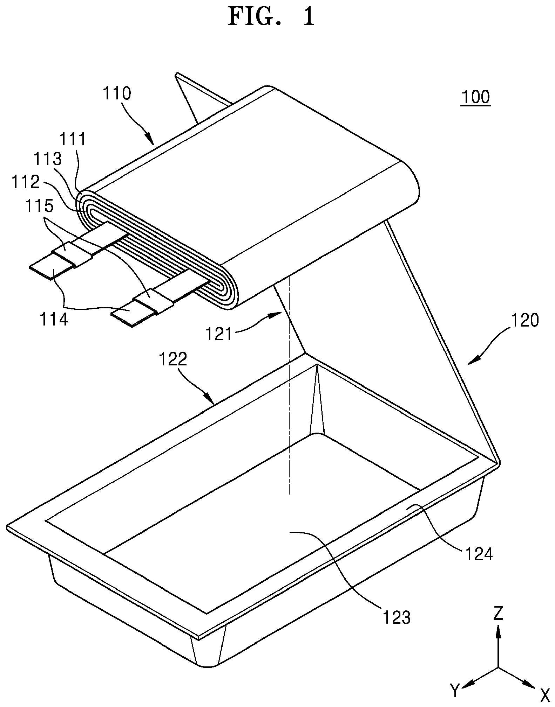

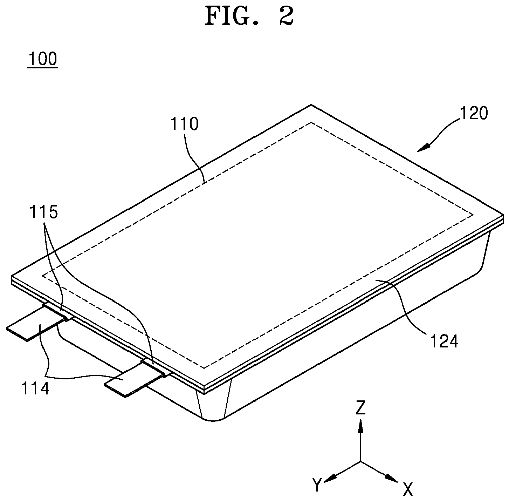

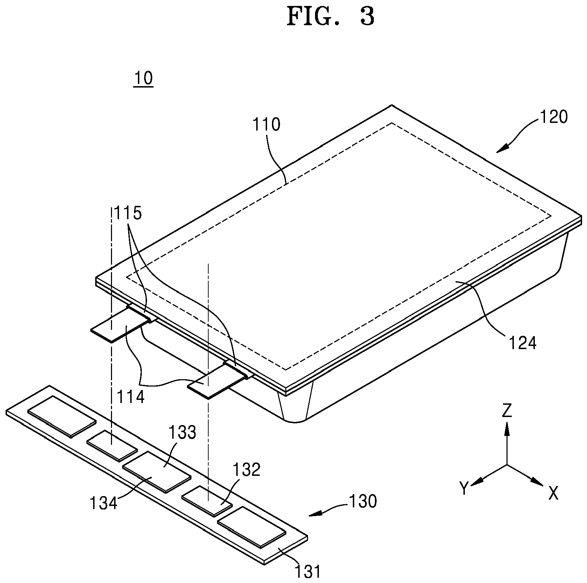

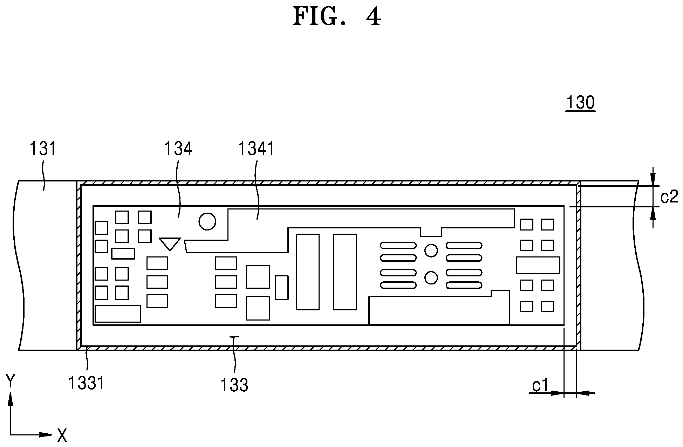

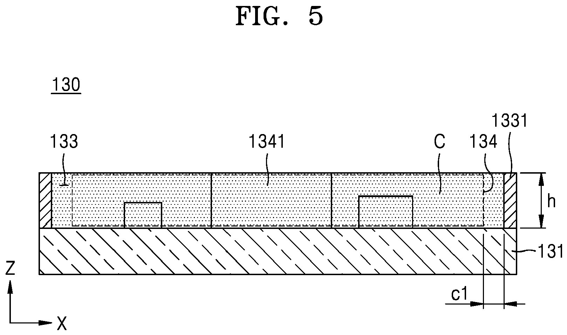

FIG. 1 shows an exploded view of a battery cell 100 according to an embodiment having an electrode assembly 110 and a case 120 combined together, FIG. 2 shows an assembled view of the battery cell 100 according to an embodiment, FIG. 3 shows a schematic view of a battery pack 10 according to an embodiment having a case 120, an electrode assembly 110, and a protection circuit module 130, FIG. 4 shows an enlarged view of a portion of the protection circuit module 130 according to an embodiment, and FIG. 5 shows a cross-sectional view of the protection circuit module 130 of FIG. 4 with a coating solution C applied.

Referring to FIGS. 1-5, the battery pack 10 according to an embodiment may be a pouch-shaped secondary battery, which may be applied to desktops, tablet PCs, smartphones, and laptops. Alternatively, the battery pack 10 may be a canned or cylindrical secondary battery, which may be applied to tablet PCs, smartphones, automotive batteries, etc. For ease of description, the following discussion will focus on the case where the battery pack 10 is pouch-shaped.

The battery pack 10 includes an electrode assembly 110, a case 120, and a protection circuit module 130.

The electrode assembly 110 may be manufactured in the form of a jelly roll by winding a separator 113 between a first electrode plate 111 and a second electrode plate 112. Alternatively, the electrode assembly 110 may be manufactured in a stacked form by stacking the separator 113 between the first electrode plates 111 and the second electrode plates 112. Alternatively, the electrode assembly 110 may be manufactured by applying both jelly roll and stack forms.

The first electrode plate 111 may include a first active material coated portion which may be formed by intermittently coating the first base material, which may be a sheet-shaped conductive material, with a first active material, and a first uncoated portion, which may be a portion where the first base material may be exposed because the first active material may not be coated thereon. The first electrode plate 111 may be a negative electrode plate, and the first active material may be a negative electrode active material including crystalline carbon, amorphous carbon, a carbon material such as a carbon composite, a carbon fiber, a lithium metal, or a lithium alloy.

The second electrode plate 112 may have a different polarity than the first electrode plate 111 and may include a second active material coating portion which may be formed by intermittently coating the second active material on the second base material, which may be a sheet-shaped conductive material, and a second uncoated portion, which may be a portion where the second base material may be exposed because the second active material may not be coated thereon. The second electrode plate 112 may be a positive electrode plate, and the second active material may include a lithium containing positive electrode active material such as LiCoO₂, LiNiO₂, LiMnO₂, LiMn₂O₄, LiNi_{1-x-y}CoₓM_{y}O₂ (wherein M is a metal), or LiFePO₄ (LFP).

A separator 113 may be between the first electrode plate 111 and the second electrode plate 112. The separator 113 may insulate the first electrode plate 111 and the second electrode plate 112, and lithium ions may be exchanged between the first electrode plate 111 and the second electrode plate 112. The separator 113 may have sufficient length to completely insulate the first electrode plate 111 and the second electrode plate 112 even if the electrode assembly 110 contracts or expands during the process of charging or discharging the battery pack 10.

An electrode tab 114 may be on the first electrode plate 111 and the second electrode plate 112, respectively, and may protrude to one side. The electrode tab 114 may be provided in a pair corresponding to the first electrode plate 111 and the second electrode plate 112. The electrode tab 114 may be electrically connected to one side of the first uncoated portion of the first electrode plate 111 and extend toward the outside of the electrode assembly 110. In addition, the electrode tab 114 may also be electrically connected to one side of the second uncoated portion of the second electrode plate 112 and extend toward the outside of the electrode assembly 110.

A film portion 115 may be on the electrode tab 114. The film portion 115 may be on a side of the electrode tab 114 or may wrap around the electrode tab 114. The film portion 115 may seal the electrode tab 114 exposed to the outside of the electrode assembly 110. In order to prevent the electrode tab 114 from contacting the metal layer exposed at the end of the sealing portion 124 of the case 120 described below and causing a short-circuit, the film portion 115 may be thermally fused to the sealing portion 124 so that the electrode tab 114 and the sealing portion 124 are tightly combined.

The case 120 may form an exterior of the battery pack 10, with the electrode assembly 110 therein. The shape and size of the case 120 may have a shape and size corresponding to the electrode assembly 110. As shown in FIG. 1, the case 120 may have a cuboidal shape with a hollow interior. Additionally, the case 120 may have other shapes, such as a polyhedral or cylindrical shape.

The case 120 may include a cover 121, a lower case 122, an interior space 123, and a sealing portion 124.

The lower case 122 may be provided with an interior space 123 that has a dimension larger than the dimension of the electrode assembly 110, and the electrode assembly 110 may be inserted into the interior space 123. The cover 121 may be on a top surface of the lower case 122 in a manner that may allow it to open and close and to cover the electrode assembly 110 with the electrode assembly 110 inserted in the interior space 123.

The sealing portion 124 may be along a top edge of the lower case 122. As shown in FIG. 2, with the electrode assembly 110 housed inside the case 120, a portion of the electrode tab 114 may be exposed to the outside of the case 120. A film portion 115 on the electrode tab 114 may be between the cover 121 and the lower case 122 at a location corresponding to the sealing portion 124. Accordingly, a battery cell 100 may be formed in which the electrode assembly 110 may be housed in the case 120.

The protection circuit module 130 may include electrical circuits and various components to prevent overcharging, over-discharging, over-current, and short-circuiting of the battery cell 100 (electrode assembly 110). As shown in FIG. 3, a protection circuit module 130 may be on the outside of the case 120 and may be connected to the electrode tab 114. The protection circuit module 130 may have a flat plate shape to support the pair of electrode tabs 114.

In an embodiment, the protection circuit module 130 may include a substrate 131, a substrate tab 132, a coating area 133, and a component mounting area 134.

As shown in FIG. 3, the substrate 131 may support different configurations of the protection circuit module 130 and may be where various components are mounted. The substrate 131 may be a printed circuit board (PCB) substrate, which may be a flexible printed circuit board (FPCB) substrate. The substrate 131 may be where various electrical circuits and components for controlling the electrode assembly 110 are provided, and may be wired or wirelessly connected to an external control module.

A substrate tab 132 may be on the substrate 131 and may be connected to the electrode tab 114 of the electrode assembly 110. As shown in FIG. 3, one or more substrate tabs 132 may be spaced apart from each other on the top surface of the substrate 131 and may be provided in the same number as the electrode tab 114. With the substrate tab 132 and electrode tab 114 in contact with each other, they may be welded, e.g., laser welded, to combine the electrode assembly 110 and the protection circuit module 130.

The substrate tab 132 may be between a plurality of adjacent component mounting areas 134. The substrate tab 132 may also be made of a metallic material, such as Ni.

A coating area 133 may correspond to the component mounting areas 134 as an area where components and circuits of the protection circuit module 130 may be coated. The coating area 133 may include the coating solution C or film, etc., to insulate and protect the electrical circuits and components provided in the component mounting area 134 from external impact. For ease of description, the following discussion will focus on the case where the coating area 133 may be coated with the coating solution C. The type of coating solution C may be sufficient if the coating solution C can insulate and protect the circuit and components from external impact. The coating solution C may be a highly viscous material, and may be an ultra-violet (UV) coating solution.

As shown in FIG. 4, the coating area 133 may include the component mounting area 134. The coating area 133 may have an area equal to or greater than the component mounting area 134, with the component mounting area 134 in the inner side. In addition, the coating area 133 may have at least a portion at a different height than the top surface of the substrate 131. That is, the coating area 133 may at least partially form a step with the top surface of the substrate 131, such that the coating solution C may be retained within the coating area 133, as shown in FIG. 5. And the coating solution C may not migrate to other areas of the substrate 131 or to the substrate tab 132.

In an embodiment, the coating area 133 may include the protruding structure 1331.

As shown in FIG. 4 and FIG. 5, the protruding structure 1331 may form a boundary of the coating area 133 along the edge of the component mounting area 134. The protruding structure 1331 may have a certain width on the top surface of the substrate 131. In addition, the protruding structure 1331 may be formed higher than the top surface of the substrate 131 by a height h. The height h may be appropriately selected considering the capacity of the coating solution C and the area of the component mounting area 134. The height h may be 0.1 mm to 1 mm, or 0.2 mm to 0.8 mm, or 0.3 mm to 0.7 mm. The height h may be 0.6 mm.

The protruding structure 1331 may be a foam tape. The tape-like protruding structure 1331 that may have a certain width may be stacked in a plurality of layers on the top surface of the substrate 131 to have a height h.

The protruding structures 1331 may be continuous without breaks. As shown in FIG. 4, the protruding structure 1331 may form a closed contour if viewed in a plan view. Accordingly, the coating area 133 may extend continuously without breaks, such that if the coating solution C is introduced into the coating area 133, the coating solution C may not flow out from the coating area 133.

The overall shape and size of the protruding structure 1331 may be appropriately selected based on the shape and size of the component mounting area 134. As shown in FIG. 4, if the component mounting area 134 is rectangular, the protruding structure 1331 may include a pair of long sides and a pair of short sides to form a similar rectangle. In addition, the pair of long sides may be arranged in the lengthwise direction of the substrate 131 and the pair of short sides may be arranged in the widthwise direction of the substrate 131 intersecting the long sides.

As shown in FIG. 4, a pair of protruding structures 1331 may abut the edges of the substrate 131 to maximize the area of the coating area 133.

The protruding structures 1331 may all have the same height. Alternatively, the protruding structures 1331 may have different heights. If the coating solution C is injected from the center of the coating area 133, a coating solution C that has a high viscosity may not have a uniform height across the coating area 133, but rather may have a shape that may be highest at the center of the coating area 133 and gradually decreases toward the sides. Therefore, the protruding structure 1331 around the center of the component mounting area 134 may have a greater height to maintain the centrally located coating solution C from leaving the coating area 133. The protruding structure 1331 may have the greatest height around the center of the component mounting area 134, and may gradually decrease in height from the center outward. This may not only allow the location and shape of the coating solution C to be maintained, but may also prevent the protruding structure 1331 from over-protruding overall and interfering with other components, etc.

An edge of the coating area 133 may be spaced apart from an edge of the component mounting area 134. As shown in FIG. 4, the coating area 133 may have a larger area than the component mounting area 134, and the component mounting area 134 may be on an inner side of the coating area 133. In addition, an inner edge of the coating area 133 may be spaced apart from an outer edge of the component mounting area 134. The coating area 133 may have a clearance c1 from the component mounting area 134 in the lengthwise direction (X-axis direction of FIG. 4) and a clearance c2 from the component mounting area 134 in the widthwise direction (Y-axis direction of FIG. 4). The clearance c1 and the clearance c2 may be equal to each other, or one may be larger than the other. As such, the coating area 133 may have a larger area than the component mounting area 134, and a gap may be formed between the coating area 133 and the component mounting area 134. Such a gap may function as a buffer zone, allowing the coating solution C to be reliably applied to the component mounting area 134.

The component mounting area 134 may be the area where the various electrical circuits and the plurality of components 1341 of the protection circuit module 130 are mounted. As shown in FIG. 3, a plurality of component mounting areas 134 may be on the top surface of the substrate 131, and each component mounting area 134 may be between a plurality of adjacent substrate tabs 132. However, some circuits and components of the protection circuit module 130 may also be on the outside of the component mounting area 134.

The component mounting area 134 may be an area formed by extending along the edges of the plurality of components 1341. Here, the edges of the plurality of components 1341 may be based on the components 1341 that may be most outwardly located in the lengthwise direction and the widthwise directions of the substrate 131. Accordingly, as shown in FIG. 4, the shape of the component mounting area 134 may be a rectangle with long sides in the lengthwise direction of the substrate 131.

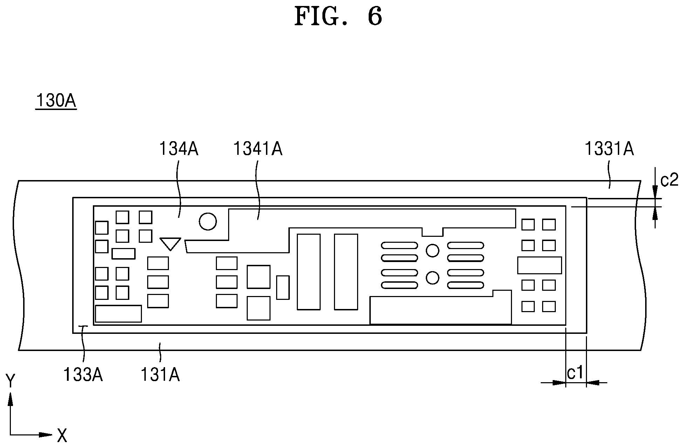

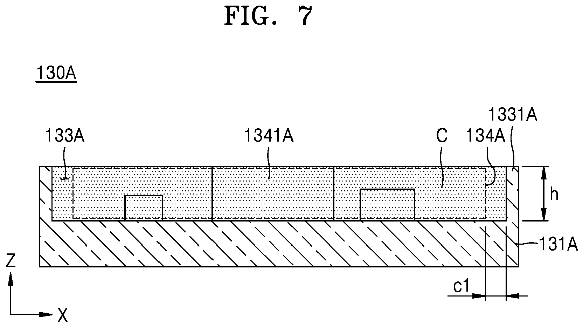

FIG. 6 shows an enlarged view of a portion of the protection circuit module 130A according to another embodiment, and FIG. 7 shows a cross-sectional view of the protection circuit module 130A of FIG. 6 with the coating solution C applied thereto.

The protection circuit module 130A according to the present embodiment may have partially different configurations with respect to the coating area 133A compared to the protection circuit module 130 according to the previous embodiment, while the remaining configurations may be the same. For ease of description, the following discussion will focus on the coating area 133A.

As shown in FIG. 6, the coating area 133A may include a component mounting area 134A. The coating area 133A may have an area equal to or greater than the component mounting area 134A, with the component mounting area 134A in the inner side. In addition, the coating area 133Amay have at least a portion at a different height than the top surface of the substrate 131A. That is, the coating area 133A may at least partially form a step with the top surface of the substrate 131A, such that the coating solution C may be retained within the coating area 133A, as shown in FIG. 7. And the coating solution C may not migrate to other areas of the substrate 131A or to the substrate tab 132 of FIG. 3.

The coating area 133Amay include a step portion 1331A on a top surface of substrate 131A. The step portion 1331A may be made of the same material as the substrate 131Aand may be formed by stacking on the top surface of the substrate 131A. The step portion 1331A may be further stacked on the top surface of the substrate 131A along the edge of the component mounting area 134A. The step portion 1331Amay have a height h. Accordingly, as shown in FIG. 7, the coating area 133A may be formed on an inner side of the step portion 1331A, and a coating solution C may be applied to and retained in the coating area 133A.

The step portion 1331A may have a certain width on the top surface of the substrate 131A. In addition, the step portion 1331A may be formed higher than the top surface of the substrate 131A by a height h. The height h may be appropriately selected considering the capacity of the coating solution C and the area of the component mounting area 134A. The height h may be 0.1 mm to 1 mm, or 0.2 mm to 0.8 mm, or 0.3 mm to 0.7 mm. The height h may be 0.6 mm.

The step portions 1331A may be continuous without breaks. As shown in FIG. 6, the step portion 1331A may form a closed contour if viewed in a plan view. Accordingly, the coating area 133A may extend continuously without breaks, such that if the coating solution C is introduced into the coating area 133A, the coating solution C may not flow out from the coating area 133A.

The overall shape and size of the step portion 1331Amay be appropriately selected based on the shape and size of the component mounting area 134A. As shown in FIG. 6, if the component mounting area 134A is rectangular, the step portion 1331A may include a pair of long sides and a pair of short sides to form a similar rectangle. In addition, the pair of long sides may be arranged in the lengthwise direction of the substrate 131A and the pair of short sides may be arranged in the widthwise direction of the substrate 131A intersecting the long sides.

The step portions 1331A may all have the same height. Alternatively, the step portions 1331Amay have different heights. If the coating solution C is injected from the center of the coating area 133A, a coating solution C that has a high viscosity may not have a uniform height across the coating area 133A, but rather may have a shape that may be highest at the center of the coating area 133A and gradually decreases toward the sides. Therefore, the step portion 133 1A around the center of the component mounting area 134A may have a greater height to maintain the centrally located coating solution C from leaving the coating area 133A. The step portion 1331Amay have the greatest height around the center of the component mounting area 134A, and may gradually decrease in height from the center outward. This may not only allow the location and shape of the coating solution C to be maintained, but may also prevent the step portion 1331A from over-protruding overall and interfering with other components, etc.

The step portion 1331A may only be around the component mounting area 134A. That is, the step portion 1331A may not be around the substrate tab 132 of FIG. 3.

The step portion 1331A around the component mounting area 134Amay be inclined. For example, the step portion 1331A may wrap around the component mounting area 134A, and the step portion 1331Aalong the edge of the component mounting area 134A may include an area inclined downward toward the component mounting area 134A. Accordingly, even if some of the coating solution C is temporarily applied to the top surface of the step portion 1331A, it may flow down the slope and back into the coating area 133A.

An edge of the coating area 133Amay be spaced apart from an edge of the component mounting area 134A. As shown in FIG. 6, the coating area 133A may have a larger area than the component mounting area 134A, and the component mounting area 134Amay be on an inner side of the coating area 133A. In addition, an inner edge of the coating area 133A may be spaced apart from an outer edge of the component mounting area 134A. The coating area 133A may have a clearance c1 from the component mounting area 134Ain the lengthwise direction (X-axis direction of FIG. 6) and a clearance c2 from the component mounting area 134A in the widthwise direction (Y-axis direction of FIG. 6). The clearance c1 and the clearance c2 may be equal to each other or one may be larger than the other. As such, the coating area 133A may have a larger area than the component mounting area 134A, and a gap may be formed between the coating area 133A and the component mounting area 134A. Such a gap may function as a buffer zone of sorts, allowing the coating solution C to be reliably applied to the component mounting area 134A.

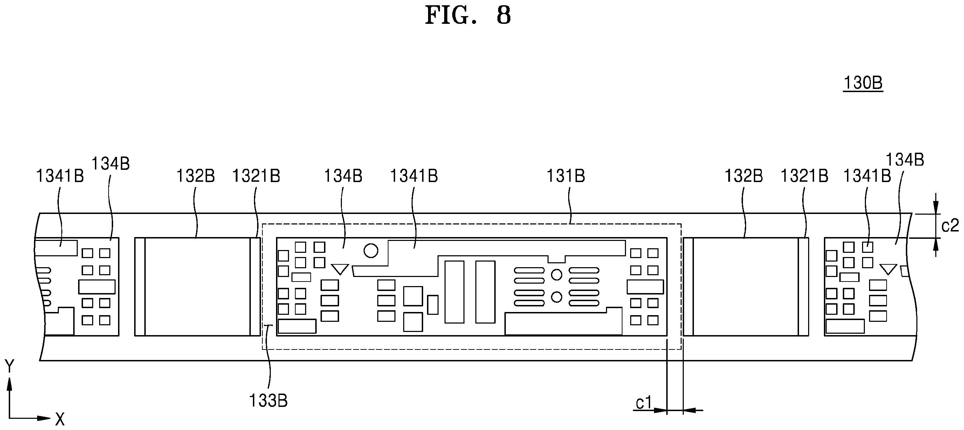

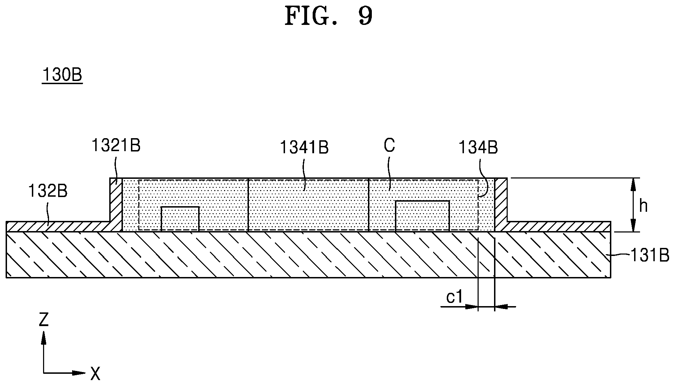

FIG. 8 shows an enlarged view of a portion of the protection circuit module 130B according to another embodiment, and FIG. 9 shows a cross-sectional view of the protection circuit module 130B of FIG. 8 with the coating solution C applied thereto.

The protection circuit module 130B according to the present embodiment may have partially different configurations with respect to the substrate tab 132B and the coating area 133B compared to the protection circuit module 130 according to the previous embodiment, while the remaining configurations may be the same. For ease of description, the following discussion will focus on substrate tab 132B and coating area 133B.

A plurality of substrate tabs 132B may be on the substrate 131B. In addition, as shown in FIG. 8, one coating area 133B and one component mounting area 134B may be between an adjacent pair of substrate tabs 132B. The pair of substrate tabs 132B may compartmentalize the coating area 133B shown as a dashed line in FIG. 8 to include the component mounting area 134B between the substrate tabs 132B.

In an embodiment, the substrate tab 132B may include an extension 1321B.

The extension 1321B may be formed by a bending at an end of the substrate tab 132B. As shown in FIG. 8 and FIG. 9, the extension 1321B may be each at one end and the other end, in the lengthwise direction of the substrate tab 132B, and may extend by bending in the height wise direction. Accordingly, as shown in FIG. 9, the coating area 133B may abut the extension 1321B, and a coating area 133B may be formed between each of the extensions 1321B on the pair of substrate tabs 132B. The coating area 133B may be an area compartmentalized by a pair of long sides of the substrate 131B and a pair of imaginary lines extending from the pair of extensions 1321B with the component mounting area 134B in between.

The extension 1321B may have a height h based on the top surface of the substrate 131B. Therefore, even if the coating solution C is applied to the coating area 133B, the coating solution C may be retained within the coating area 133B by the extension 1321B. Accordingly, the coating solution C may be prevented from getting on the rest of the substrate tab 132B except for the extension 1321B, so that the substrate tab 132B and the electrode tab of the electrode assembly may be easily combined. The height h may be suitably selected considering the volume of the coating solution C and the area of the component mounting area 134B. The height h may be 0.1 mm to 1 mm, or 0.2 mm to 0.8 mm, or 0.3 mm to 0.7 mm. The height h may be 0.6 mm.

The plurality of extensions 1321B may have different heights. That is, the height h of the extensions 1321B may be determined by the amount of coating solution C applied to the component mounting area 134B, which may be determined by characteristics of the component mounting area 134B, such as the area of the component mounting area 134B and the number and size of components 1341B therein. Therefore, the plurality of extensions 1321B forming the plurality of component mounting areas 134B may have different heights h depending on the characteristics of the corresponding component mounting areas 134B.

The extension 1321B may be perpendicular to the top surface of the substrate 131B. Alternatively, the extension 1321B may be inclined toward the component mounting area 134B. Apair of extensions 1321B on either side of the component mounting area 134B may be inclined toward each other. Accordingly, the coating area 133B may have a tapered shape that gradually narrows upward if viewed from the side, and the coating solution C may be more reliably retained in the interior of the coating area 133B.

The edge of the coating area 133B may be spaced apart from the edge of the component mounting area 134B. As shown in FIG. 8, the coating area 133B may have a larger area than the component mounting area 134B, and the component mounting area 134B may be in the interior of the coating area 133B. In addition, an inner edge of the coating area 133B may be spaced apart from an outer edge of the component mounting area 134B. The coating area 133B may have a clearance c1 from the component mounting area 134B in the lengthwise direction (the X-axis direction of FIG. 9). In this way, the coating area 133B may have a larger area than the component mounting area 134B while being spaced apart from the component mounting area 134B, so that the coating solution C may reliably protect the component mounting area 134B.

An edge of the component mounting area 134B may be spaced apart from an edge of the substrate 131B. As shown in FIG. 8, in the widthwise direction of the substrate 131B, the edge of the component mounting area 134B may be spaced apart from the edge of the substrate 131B by a clearance c2.

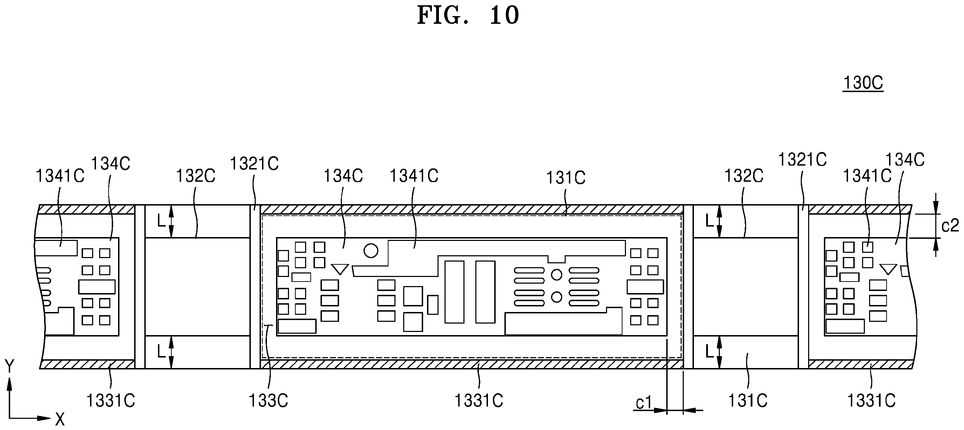

FIG. 10 shows an enlarged view of a portion of the protection circuit module 130C according to another embodiment.

The protection circuit module 130C according to the present embodiment may have partially different configurations with respect to the substrate tab 132C and the coating area 133C compared to the protection circuit module 130B according to the previous embodiment, while the remaining configurations may be the same. For ease of description, the following discussion will focus on substrate tab 132C and coating area 133C.

The substrate tab 132C may include an extension 1321C, which may be on the entire width of the substrate 131C. As shown in FIG. 10, the extensions 1321C may each extend a length L in the widthwise direction (Y-axis direction of FIG. 10) of the substrate 131C beyond the area of the substrate tab 132C that connects with the electrode tab. The length L may be shorter than the length and width of the area of the substrate tab 132C (the area connecting with the electrode tab) excluding the extension 1321C.

In an embodiment, the coating area 133C may include a protruding structure 1331C. The protruding structure 1331C may include the same configuration as the protruding structure 1331 described above, and the following discussion will focus on configurations that differ from the protruding structure 1331.

As shown in FIG. 10, a pair of protruding structures 1331C may correspond to one coating area 133C. The pair of protruding structures 1331C may be spaced apart from each other in the widthwise direction on the top surface of the substrate 131C. In addition, the pair of protruding structures 1331C may also be between an adjacent pair of substrate tabs 132C. As shown in FIG. 10, each of the ends of the protruding structures 1331C may be in contact with an extension 1321C. Accordingly, the coating area 133C may be compartmentalized by the pair of extensions 1321C and the pair of protruding structures 1331C.

The protruding structures 1331C may all have the same height. Alternatively, the protruding structures 1331C may have different heights. If the coating solution C is injected from the center of the coating area 133C, a coating solution C that has a high viscosity may not have a uniform height across the coating area 133C, but rather may have a shape that may be highest at the center of the coating area 133C and gradually decreases toward the sides. Therefore, the protruding structure 1331C around the center of the component mounting area 134C may have a greater height to maintain the centrally located coating solution C from leaving the coating area 133C. The protruding structure 1331C may have the greatest height around the center of the component mounting area 134C, and may gradually decrease in height from the center outward. This may not only allow the location and shape of the coating solution C to be maintained, but may also prevent the protruding structure 1331C from over-protruding overall and interfering with other components, etc.

The extension 1321C and the protruding structure 1331C may be continuous without breaks. As shown in FIG. 10, the pair of extensions 1321C and the pair of protruding structures 1331C that may include one coating area 133C may form a closed contour if viewed in a plan view. Accordingly, the coating area 133C may extend continuously without breaks, so that the coating solution C does not flow out from the coating area 133C.

The extension 1321C may be supported on the protruding structure 1331C. As shown in FIG. 10, the extensions 1321C may be arranged across the widthwise direction of the substrate 131C, and the protruding structures 1331C may be arranged across the lengthwise direction of the substrate 131C therebetween to abut these pair of extensions 1321C. Therefore, the extensions 1321C may be supported by the protruding structures 1331C with the side facing the coating area 133C so that they do not bend toward the coating area 133C if subjected to an external force.

An edge of the coating area 133C may be spaced apart from an edge of the component mounting area 134C. As shown in FIG. 10, the coating area 133C may have a larger area than the component mounting area 134C, and the component mounting area 134C may be on the interior of the coating area 133C. In addition, an inner edge of the coating area 133C may be spaced apart from an outer edge of the component mounting area 134C. The coating area 133C may have a clearance c1 from the component mounting area 134C in the lengthwise direction (X-axis direction of FIG. 10) and a clearance c2 from the component mounting area 134C in the widthwise direction (Y-axis direction of FIG. 10). The clearance c1 and the clearance c2 may be equal to each other or one may be larger than the other. As such, the coating area 133C may have a larger area than the component mounting area 134C, and a gap may be formed between the coating area 133C and the component mounting area 134C. Such a gap may function as a buffer zone of sorts, allowing the coating solution C to be reliably applied to the component mounting area 134C.

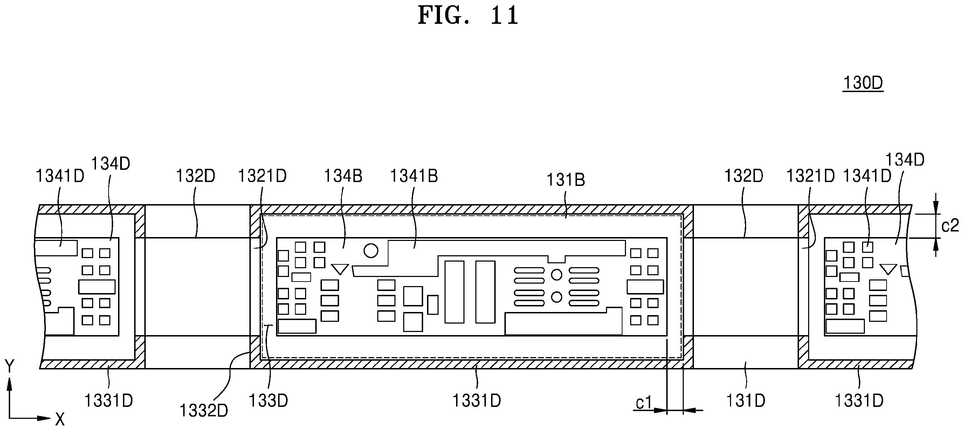

FIG. 11 is an enlarged view of a portion of the protection circuit module 130D according to another embodiment.

The protection circuit module 130D according to the present embodiment may have partially different configurations with respect to the coating area 133D compared to the protection circuit module 130B according to the previous embodiment, while the remaining configurations may be the same. For ease of description, the following discussion will focus on the coating area 133D.

A coating area 133D may include a protruding structure 1331D.

As shown in FIG. 11, the protruding structures 1331D may be arranged in a plurality along the length of the substrate 131D (along the X-axis in FIG. 11) and may be between a pair of substrate tabs 132D.

The protruding structure 1331D may include a bent portion 1332D at both ends.

As shown in FIG. 11, the bent portion 1332D may be formed at each lengthwise end of the protruding structure 1331D and may be bent and extended in a direction intersecting the lengthwise direction of the protruding structure 1331D (the Y-axis direction of FIG. 11). The ends of the bent portion 1332D may abut the extensions 1321D of the substrate tabs 132D, such that the extensions 1321D may be between the pair of bent portions 1332D. Accordingly, the coating area 133D may be compartmentalized by the pair of extensions 1321D and the pair of protruding structures 1331D.

The protruding structures 1331D may all have the same height. Alternatively, the protruding structures 1331D may have different heights. If the coating solution C is injected from the center of the coating area 133D, a coating solution C that has a high viscosity may not have a uniform height across the coating area 133D, but rather may have a shape that may be highest at the center of the coating area 133D and gradually decreases toward the sides. Therefore, the protruding structure 1331D around the center of the component mounting area 134D may have a greater height to maintain the centrally located coating solution C from leaving the coating area 133D. The protruding structure 1331D may have the greatest height around the center of the component mounting area 134D, and may gradually decrease in height from the center outward. The bent portion 1332D may have a lesser height than other portions of the protruding structure 1331D. This may not only allow the location and shape of the coating solution C to be maintained, but may also prevent the protruding structure 1331D from over-protruding overall and interfering with other components, etc.

The extension 1321D and the protruding structure 1331D may be continuous without breaks. As shown in FIG. 11, the pair of extensions 1321D and the pair of protruding structures 1331D that include one coating area 133D may form a closed contour if viewed in a plan view. Accordingly, the coating area 133D may extend continuously without breaks, so that the coating solution C does not flow out from the coating area 133D.

The extension 1321D may be supported on the protruding structure 1331D. As shown in FIG. 11, one extension 1321D may be engaged in a pair of bent portions 1332D along the widthwise direction of the substrate 131C. Therefore, the extensions 1321D may be supported by the pair of bent portions 1332D in the widthwise direction of the substrate 131D.

An edge of the coating area 133D may be spaced apart from an edge of the component mounting area 134D. As shown in FIG. 11, the coating area 133D may have a larger area than the component mounting area 134D, and the component mounting area 134D may be on the interior of the coating area 133D. In addition, an inner edge of the coating area 133D may be spaced apart from an outer edge of the component mounting area 134D. The coating area 133D may have a clearance c1 from the component mounting area 134D in the lengthwise direction (X-axis direction of FIG. 11) and a clearance c2 from the component mounting area 134D in the widthwise direction (Y-axis direction of FIG. 11). The clearance c1 and the clearance c2 may be equal to each other or one may be larger than the other. As such, the coating area 133D may have a larger area than the component mounting area 134D, and a gap may be formed between the coating area 133D and the component mounting area 134D. Such a gap may function as a buffer zone of sorts, allowing the coating solution C to be reliably applied to the component mounting area 134D.

The battery pack according to an embodiment may be formed to a desired height and shape with the coating solution applied to the component mounting area of the protection circuit module.

The battery pack according to an embodiment may help prevent the coating solution from entering areas other than the component mounting area of the substrate, thereby preventing other areas of the substrate from being contaminated. The battery pack according to an embodiment may help ensure that tabs connecting the electrode assembly and the protection circuit module are not contaminated by the coating solution, thereby ensuring that the electrode assembly and the protection circuit module are well combined.

The battery pack according to an embodiment may help simply form a coating area via a protruding structure around it to include a component mounting area, thereby facilitating management of the height and shape of the coating solution.

In an embodiment, the battery pack may help form a step portion with component mounting areas therein to manage the height and shape of the coating solution.

The battery pack according to an embodiment may help form an extension on the substrate tab to prevent coating solution from entering the area of the substrate tab that connects to the electrode assembly without adjusting the height of the substrate.

By way of summation and review, the increase in the computational performance of processors included in electronic devices and the increase in the output of electric vehicles naturally lead to an increase in the capacity of secondary batteries. In addition, as secondary batteries are required to have a desired output within a limited space while considering user's convenience, the overcharge cut-off voltage of secondary batteries has been gradually increased and the over-discharge cut-off voltage gradually has been decreased, thereby expanding the usable area of battery packs with secondary batteries.

For this reason, battery packs include a protection circuit module to prevent overcharging, over-discharging, over-current, and short-circuit of the battery cells during use. The protection circuit module has an overcharge protection function to prevent a battery cell from overcharging above the protection voltage, which results in swelling and explosion due to gas and heat generated by the battery cell, an over-discharge protection function to prevent the battery cell from discharging below the proper voltage, which results in damage to the battery cell, an over-current protection function to prevent the battery cell or the protection circuit module from being damaged by an over-current due to malfunction of an external device or an accidental over-current, and a short-circuit protection function to prevent the battery cell or the protection circuit module from being damaged by a short-circuit of an external load.

The protection circuit module has several components mounted on a substrate. In the protection circuit module, the components are insulated from each other and the components are further protected by coating a coating solution on top of the components to prevent the components from being damaged by shocks that occur during use. However, if the coating solution is coated directly on top of the components without a guiding tool, the coating solution may spill over not only into the coating area where the components are arranged, but also into neighboring areas. In this case, for example, the coating solution may contaminate the substrate tabs that are configured to connect the protection circuit module to the battery cell, making it impossible to weld the protection circuit module to the battery cell. In addition, there are no guiding tools to maintain the coating solution at a constant shape and height, making it difficult to form the protection circuit module to the desired height and shape.

One or more embodiments include a battery pack that allows a coating solution to be applied to a coating area of a protection circuit module at a constant height, thereby preventing contamination of the protection circuit module and facilitating management of the shape and height of the protection circuit module.

As used herein, the terms "or" and "and/or" are not exclusive terms and include any and all combinations of one or more of the associated listed items. Expressions such as "at least one of," when preceding a list of elements, modify the entire list of elements and do not modify the individual elements of the list.

The disclosure includes various embodiments and variations, certain of which are illustrated in the drawings and described in the following description of the disclosure. The disclosure is not limited to these specific embodiments, but includes all modifications, equivalents, or substitutions that are within the scope of the thought and skill of the disclosure.

The terms first, second, and the like are not intended to be limiting, but are used to distinguish one component from another. The singular expression includes the plural unless the context clearly indicates otherwise. In the following embodiments, the terms "include," "comprise" or "has" mean the presence of the recited features, numbers, steps, actions, components, parts, or combinations thereof, and do not exclude the possibility of the presence or addition of one or more other features, numbers, steps, actions, components, parts, or combinations thereof. The terms x-axis, y-axis, and z-axis are not limited to the three axes in a Cartesian coordinate system, but may be interpreted in a broad sense to include the axes. The x-axis, y-axis, and z-axis may be orthogonal to each other, but may also refer to different directions that are not orthogonal to each other.

When an embodiment is otherwise implementable, a specific process sequence may be performed differently from the described sequence. For example, two processes described in succession may be performed substantially simultaneously, or in the reverse order from that described.

Example embodiments have been disclosed herein, and although specific terms are employed, they are used and are to be interpreted in a generic and descriptive sense only and not for the purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
a case;
an electrode assembly accommodated in the case; and
a protection circuit module connected to the electrode assembly,
wherein the protection circuit module includes:
a substrate,
one or more component mounting areas with a plurality of components, and
one or more coating areas, at least some of which have different heights from a top surface of the substrate.

2. The battery pack as claimed in claim 1, wherein the one or more component mounting areas are on an inner side of the one or more coating areas.

3. The battery pack as claimed in claim 1 or claim 2, wherein a coating solution is applied to an inner side of the one or more coating areas.

4. The battery pack as claimed in any one of claims 1 to 3, wherein the one or more coating areas form a gap with the one or more component mounting areas.

5. The battery pack as claimed in any one of claims 1 to 4, wherein the one or more coating areas include protruding structures on the substrate enclosing the one or more component mounting areas.

6. The battery pack as claimed in any one of claims 1 to 5, wherein a contour of the one or more coating areas extends continuously without breaks.

7. The battery pack as claimed in any one of claims 1 to 6, wherein:
the one or more coating areas are compartmentalized by one or more step portions stacked on the substrate and enclosing the one or more component mounting areas, and
the one or more component mounting areas are inside the one or more coating areas, optionally wherein the one or more step portions include an area inclined downward toward the one or more component mounting areas.

8. The battery pack as claimed in any one of claims 1 to 6, wherein:
the protection circuit module includes one or more substrate tabs on the substrate and having one more extensions bent upwardly, and
the one or more coating areas abut the one or more extensions of the one or more substrate tabs.

9. The battery pack as claimed in claim 8, wherein the one or more extensions extend across a widthwise direction of the substrate.

10. The battery pack as claimed in claim 8 or claim 9, wherein the one or more extensions are inclined toward the one or more coating areas such that the one or more coating areas have a tapered shape that narrows upwards if viewed from the side.

11. The battery pack as claimed in claim 8, wherein:
a pair of substrate tabs are spaced apart along a lengthwise direction of the substrate such that a component mounting area is therebetween,
the pair of substrate tabs compartmentalize a coating area including the component mounting area, and
the pair of substrate tabs include extensions.

12. The battery pack as claimed in claim 11, wherein the coating area includes a pair of protruding structures between the pair of substrate tabs and on a top surface of the substrate.

13. The battery pack as claimed in claim 12, wherein the pair of protruding structures abut the extensions of the pair of substrate tabs, forming an overall closed contour with the extensions.

14. The battery pack as claimed in claim 12 or claim 13, wherein the pair of protruding structures include one or more bent portions extending toward the pair of substrate tabs.

15. The battery pack as claimed in claim 14, wherein the one or more bent portions are each at a lengthwise end of a protruding structure and are paired such that the extensions are arranged therebetween.
